# EUROPEAN PATENT SPECIFICATION

(11) **EP 3 377 970 B1**
(45) Date of publication and mention of the grant of the patent: **04.09.2019**
(21) Application number: 16805954.1
(22) Date of filing: 16.11.2016
(51) Int. Cl.: G06F 16/23

(54) **MULTI-VERSION REMOVAL MANAGER**
MANAGER FÜR MULTIVERSIONSENTFERNUNG
GESTIONNAIRE D'ÉLIMINATION MULTIVERSION

(30) Priority: 17.11.2015 US 201562256692 P; 14.11.2016 US 201615350573
(43) Date of publication of application: 26.09.2018
(73) Proprietor: Microsoft Technology Licensing, LLC, Redmond, Washington 98052-6399 (US)
(72) Inventor: COSKUN, Mert, Redmond, Washington 98052-6399 (US); KAKIVAYA, Gopala Krishna R., Redmond, Washington 98052-6399 (US); BENSON, Jesse M., Redmond, Washington 98052-6399 (US); SUBBARAYALU, Preetha L., Redmond, Washington 98052-6399 (US)
(74) Representative: Grünecker Patent- und Rechtsanwälte PartG mbB
(86) International application number: PCT/US2016/062300
(87) International publication number: WO 2017/087536

(56) References cited:
- Gerhard Weikum ET AL: "Implementation and Pragmatic Issues" In: "Transactional Information Systems", 1 January 2002 (2002-01-01), Elsevier, XP055345252, ISBN: 978-1-55860-508-4 pages 349-376, DOI: 10.1016/B978-155860508-4/50011-9, page 354, paragraph 2 page 354, paragraph 4 page 355; figure 10.2 page 355, paragraph 1 page 355, paragraph 2 page 355, paragraph 3 - page 356, paragraph 1 page 356, paragraph 2 page 357, paragraph 1 page 362, paragraph 4
- BOBER P M ET AL: "On mixing queries and transactions via multiversion locking", DATA ENGINEERING, 1992. PROCEEDINGS. EIGHTH INTERNATIONAL CONFERENCE O N TEMPE, AZ, USA 2-3 FEB. 1992, LOS ALAMITOS, CA, USA,IEEE COMPUT. SOC, US, 2 February 1992 (1992-02-02), pages 535-545, XP010026768, DOI: 10.1109/ICDE.1992.213155 ISBN: 978-0-8186-2545-9
- W.E Weihl: "Distributed Version Management for Read-Only Actions", IEEE Transactions on Software Engineering, 1 January 1987 (1987-01-01), pages 55-64, XP055104109, New York DOI: 10.1109/TSE.1987.232835 Retrieved from the Internet: URL:http://search.proquest.com/docview/195 585518
- PHILIP A BERNSTEIN ET AL: "Adapting microsoft SQL server for cloud computing", DATA ENGINEERING (ICDE), 2011 IEEE 27TH INTERNATIONAL CONFERENCE ON, IEEE, 11 April 2011 (2011-04-11), pages 1255-1263, XP031868529, DOI: 10.1109/ICDE.2011.5767935 ISBN: 978-1-4244-8959-6

## Description

### Background

Transaction processing is information processing that is divided into individual, indivisible operations called transactions. Each transaction succeeds or fails as a complete unit. It does not partially complete. If some of the operations are completed but errors occur when the others are attempted, the transaction-processing system "rolls back" all of the operations of the transaction, including the successful ones. A roll back restoring the system to the consistent, known state that it was in before processing of the transaction began. If all operations of a transaction are completed successfully, the transaction is committed by the system, and all changes to the state are made permanent. Transaction processing is included in database applications, online transaction processing applications, as well as other information processing. Although the examples may be described in terms of database applications or OLTP applications, the scope of this disclosure is not intended to be limited to such examples.

Transaction processing systems include concurrency control mechanisms to coordinate concurrent access to state while preserving consistency of state. Concurrency control mechanisms permit concurrent operations and execution of potentially conflicting transactions. One concurrency control mechanism includes locks, which delay reads until write operations have completed. Locks typically adversely affect processing performance, and are generally disfavored. Instead, multiversion concurrency control (MCC or MVCC), is a concurrency control method commonly used by transaction processing systems, such as database management systems, to provide concurrent access to the state - such as a database record, data volume, object, and the like - and in programming languages to implement transactional memory.

In MVCC, each transaction connected to a database, for example, sees a snapshot of the database at a particular instant in time. Any changes made by a write operation on the data will not be seen by other transactions until the changes have been completed or committed. The MVCC mechanism will not overwrite the old data with new data, but instead mark the old data as obsolete and add the newer version elsewhere such that multiple versions stored are stored in a version chain. This permits reads to access the data throughout the entire transaction that was visible at the point in time of beginning of the transaction, i.e., a point in time consistent view, even if that data or state was modified or deleted part way through by a concurrent transaction.

Gerhard Weikum et al., "Implementation and Pragmatic Issues" in "Transactional Information Systems", 1 January 2002, Elsevier, ISBN 978-1-55860-508-4, DOI: 10.1016/B978-155860508-4/50011-9, pages 349-376, deals with transiently keeping around versions of modified pages, records, or index entries. The key concept for transient record versioning is to keep the most recent version of a record (with a given RID) always in the place where the record would reside if there were no versioning, and to store all older versions in a separate area called the version pool.

W.E. Weihl: "Distributed Version Management for Read-Only Actions". IEEE Transactions on Software Engineering, 1 January 1987, Pages 55 - 64 , New York, DOI: 10.1109/TSE.1987.232835, retrieved from the Internet; URL: http://search.proquest.com/docview/195585518 presents four new concurrency control protocols that eliminate all interference between read-only actions and update actions, and thus offer significantly improved performance for read-only actions.

### Summary

The invention provides a method of trimming versions in transaction processing according to claim 1, a multi-version removal manager according to claim 7 and a computer-readable medium according to claim 10.

This summary is provided to introduce a selection of concepts in a simplified form that are further described below in the Description. This summary is not intended to identify key features or essential features of the claimed subject matter, nor is it intended to be used to limit the scope of the claimed subject matter.

A multi-version removal manager for a transaction processing system is disclosed. A visibility sequence number is provided to versions such that operations with a lower sequence number than the visibility sequence number have been applied and a preselected amount of operations with a higher sequence number could have been applied. Visible version versions are maintained and versions related to a visibility sequence number are removed after an executing transaction is disposed.

In one example, the systems and processes provide no more than the number of inflight snapshot transactions plus a selected amount of versions, such as two versions, are kept alive to deliver reduced, minimal, or negligible adverse impact on write throughputs and enable cross state provider consistent snapshots. In the case where the predetermined amount of previously committed versions is one, write throughput is adversely affected. In cases where the predetermined amount of versions is greater than two, additional system overhead is created. Systems and process that trim or collect version chains such that the number of versions include the number of executing transactions having snapshot isolation plus two provides for an efficient application of resources such as memory, persistent storage space, and processing.

In one example, a visibility sequence number is a logical timestamp. All snapshot reads using transaction with a particular visibility sequence number will see the state of the replica as it was at logical timestamp of the particular visibility sequence number. In an example service platform, a number called "Logical Sequence Number" (LSN) is generated by a volatile replicator and is unique per partition and per time period as the visibility sequence number. The visibility sequence number is included with barrier functionality provided by a transactional replicator to ensure that at the time a visibility sequence number is assigned to the transaction, all operations with LSN less than the visibility sequence number are applied, or committed, and at most one higher LSN may have been applied for a given key.

The disclosure relates to an aggressive version removal that can provide a form of just-in-time version trimming on top of a transaction manager that can apply/dispatch grouped transaction in parallel. It ensures that the number of versions stored by the multi-version store is limited to the number of inflight snapshot transaction plus two.

In one example, a multi-version store maintains two versions for any given row. Each version is stamped with the LSN of the commit that applied it to the store. When a new version is applied, a differential store determines from the transactional replicator whether the oldest version it is keeping for the given key is still required. If required, the version is moved to a temporal store called Multi-Version Retirement Unit (MRU), or snapshot container. If it is not required, the version is immediately disposed. In cases in which the transaction replicator detects that any version moved into MRU is not required, such as because all snapshot enumerations that were keeping it alive are not disposed, it sends a notification to the differential store indicating that it can clean the MRU of all versions kept for the specific visibility sequence number. The transaction replicator uses a version manager. The version manager assigns a visibility sequence number to transactions set for snapshot isolation, maintains all unique visibility sequence numbers and transactions that are keeping those visibility sequence numbers alive, and provides notifications when a visibility sequence number becomes invisible.

### Brief Description of the Drawings

The accompanying drawings are included to provide a further understanding of embodiments and are incorporated in and constitute a part of this disclosure. The drawings illustrate embodiments and together with the description serve to explain principles of embodiments. Other embodiments and many of the intended advantages of embodiments will be readily appreciated, as they become better understood by reference to the following description. The elements of the drawings are not necessarily to scale relative to each other. Like reference numerals designate corresponding similar parts.
Figure 1 is a block diagram illustrating an example of a computing device.
Figure 2 is a block diagram illustrating an example system incorporating a computing device such as the example computing device of Figure 1.
Figure 3 is a block diagram illustrating an example method of a multi-version removal manager that can be implemented in the system of Figure 2.
Figure 4 is a block diagram illustrating an example method of a multi-version removal manager that can be implemented with selected features of the system of Figure 2.
Figure 5 is a block diagram illustrating an example method of a multi-version removal manager that can be implemented with selected features of the system of Figure 2.
Figure 6 is a block diagram illustrating an example method including an implementation of the method of Figure 3.

### Description

In the following Description, reference is made to the accompanying drawings, which form a part hereof, and in which is shown by way of illustration specific embodiments in which the invention may be practiced. It is to be understood that other embodiments may be utilized and structural or logical changes may be made without departing from the scope of the present invention. The following description, therefore, is not to be taken in a limiting sense. It is to be understood that features of the various exemplary embodiments described herein may be combined with each other, unless specifically noted otherwise.

Transaction processing systems, which can include cloud-based service, include isolation to determine how transaction integrity is visible to other users and systems. A lower isolation level increases the ability of many users to access data at the same time, but increases the number of concurrency effects (such as dirty reads or lost updates) users might encounter. Conversely, a higher isolation level reduces the types of concurrency effects that users may encounter, but uses more system resources and increases the chances that a transaction will block another transaction from committing. Isolation is a property that defines how and when the changes made by one operation become visible to other operations or other transactions. Isolation may be implemented systemically, for example through the use of temporary tables. Two-tier systems often include a Transaction Processing manager to maintain isolation. In n-tier systems (for example, an system that provides for multiple travel websites to book a particular seat on a specific airline flight), may include isolation as a combination of stored procedures and transaction management.

For example, snapshot isolation is a guarantee that all reads made in a transaction will see a consistent snapshot of the database (typically the last committed values that existed at the time the transaction started), and the transaction will successfully commit only if no updates it has made conflict with any concurrent updates made since that snapshot. The term "snapshot" reflects the fact that all queries in the transaction see the same version, or snapshot, of the database, based on the state of the database at the moment in time when the transaction begins. No locks are acquired on the underlying data rows or data pages in a snapshot transaction, which permits other transactions to execute without being blocked by a prior uncompleted transaction. Transactions that modify data do not block transactions that read data, and transactions that read data do not block transactions that write data. This non-blocking behavior also significantly reduces the likelihood of deadlocks for complex transactions.

The following examples are described in terms of version chains, such as multiple versions of a data object, versions per row, or versions per key. One skilled in the art can readily apply the techniques and mechanisms described to concurrently process multiple version chains.

Once snapshot isolation is enabled, updated row versions for each transaction are generally maintained in a multi-version storage container or volume. A unique transaction sequence number identifies each transaction, and these unique numbers are recorded for each row version. The transaction works with the most recent row versions having a sequence number before the sequence number of the transaction. Newer row versions created after the transaction has begun are ignored by the transaction.

The transaction reads the version of the row that was current as of the start of the transaction. In one example, a transaction sequence number is assigned to a new transaction at initiation. A unique transaction sequence number identifies each transaction, and these unique numbers are recorded for each row version. The transaction works with the most recent row versions having a sequence number before the sequence number of the transaction. Newer row versions created after the transaction has begun are ignored by the transaction. The engine reads a row within the transaction and retrieves a row version having a version sequence number closest to, and lower than, the transaction sequence number. The engine determines if the transaction sequence number is not in the list of transaction sequence numbers of the uncommitted transactions active, such as inflight enumerations, when the snapshot transaction started. Operations of the transaction will not see new rows inserted after the transaction was started because those sequence number values will be higher than the value of the transaction sequence number. The current transaction will see rows that were deleted after the transaction began, because there will be a row version with a lower sequence number value. The effect of snapshot isolation is the transaction sees the data as it existed at the start of the transaction, without honoring or placing any locks on the underlying tables. This can result in performance improvements in situations where there is contention.

Multi-version stores used in providing snapshot isolation accumulate multiple versions in the store and occasionally trim or garbage collect the versions that are no longer readable. Garbage collection is typically a lazy process and stores typically do not provide for a maximum number of versions outside of system capabilities. Thus, multi-version stores often include versions no longer in use that consume resources such as memory and other overhead.

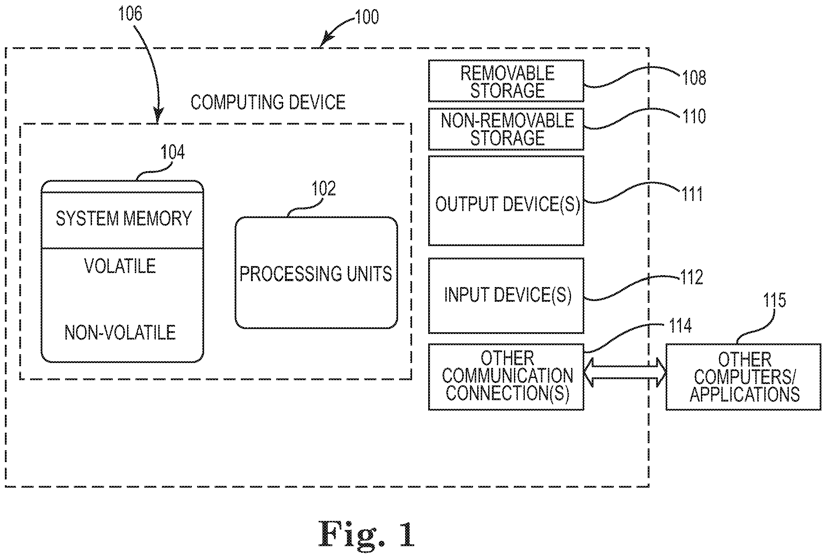

Figure 1 illustrates an exemplary computer system that can be employed in an operating environment and used to host or run a computer application included on one or more computer readable storage mediums storing computer executable instructions for controlling the computer system, such as a computing device, to perform a process. An example of a computer-implemented process includes a multi-version storage manager, such as a multi-version storage manager in a transaction processing system, that can be stored in a computer memory.

The exemplary computer system includes a computing device, such as computing device 100. In a basic hardware configuration, computing device 100 typically includes a processor system having one or more processing units, i.e., processors 102, and memory 104. By way of example, the processing units may include two or more processing cores on a chip or two or more processor chips. In some examples, the computing device can also have one or more additional processing or specialized processors (not shown), such as a graphics processor for general-purpose computing on graphics processor units, to perform processing functions offloaded from the processor 102. The memory 104 may be arranged in a hierarchy and may include one or more levels of cache. Depending on the configuration and type of computing device, memory 104 may be volatile (such as random access memory (RAM)), non-volatile (such as read only memory (ROM), flash memory, etc.), or some combination of the two. The computing device 100 can take one or more of several forms. Such forms include a tablet, a personal computer, a workstation, a server, a handheld device, a consumer electronic device (such as a video game console or a digital video recorder), or other, and can be a stand-alone device or configured as part of a computer network, computer cluster, cloud services infrastructure, or other.

Computing device 100 can also have additional features or functionality. For example, computing device 100 may also include additional storage. Such storage may be removable and/or non-removable and can include magnetic or optical disks, solid-state memory, or flash storage devices such as removable storage 108 and non-removable storage 110. Computer storage media includes volatile and nonvolatile, removable and non-removable media implemented in any suitable method or technology for storage of information such as computer readable instructions, data structures, program modules or other data. Memory 104, removable storage 108 and non-removable storage 110 are all examples of computer storage media. Computer storage media includes RAM, ROM, EEPROM, flash memory or other memory technology, CD-ROM, digital versatile discs (DVD) or other optical storage, magnetic cassettes, magnetic tape, magnetic disk storage or other magnetic storage devices, universal serial bus (USB) flash drive, flash memory card, or other flash storage devices, or any other storage medium that can be used to store the desired information and that can be accessed by computing device 100. Accordingly, a propagating signal by itself does not qualify as storage media. Any such computer storage media may be part of computing device 100.

Computing device 100 often includes one or more input and/or output connections, such as USB connections, display ports, proprietary connections, and others to connect to various devices to provide inputs and outputs to the computing device. Input devices 112 may include devices such as keyboard, pointing device (e.g., mouse), pen, voice input device, touch input device, or other. Output devices 111 may include devices such as a display, speakers, printer, or the like.

Computing device 100 often includes one or more communication connections 114 that allow computing device 100 to communicate with other computers/applications 115. Example communication connections can include an Ethernet interface, a wireless interface, a bus interface, a storage area network interface, and a proprietary interface. The communication connections can be used to couple the computing device 100 to a computer network, which can be classified according to a wide variety of characteristics such as topology, connection method, and scale. A network is a collection of computing devices and possibly other devices interconnected by communications channels that facilitate communications and allows sharing of resources and information among interconnected devices. Examples of computer networks include a local area network, a wide area network, the Internet, or other network.

In one example, a one or more of computing devices 100 can be configured as servers in a datacenter to provide cloud computing services or distributed computing services, such as transactional databases or other state provider applications. A data center can provide pooled resources on which customers or tenants can dynamically provision and scale applications as needed without having to add servers or additional networking. The datacenter can be configured to communicate with local computing devices such used by cloud consumers including personal computers, mobile devices, embedded systems, or other computing devices. Within the data center, computing device 100 can be configured as servers, either as stand-alone devices or individual blades in a rack of one or more other server devices. One or more host processors, such as processors 102, as well as other components including memory 104 and storage 110, on each server run a host operating system that can support multiple virtual machines. A tenant may initially use one virtual machine on a server to run an application. The datacenter may activate additional virtual machines on a server or other servers when demand increases, and the datacenter may deactivate virtual machines as demand drops.

The datacenter can provide services including a distributed platform to build and manage scalable applications composed of microservices running at high densities on a shared pool of machines, or clusters, and to provide a runtime for building distributed, scalable stateless and stateful microservices and application management capabilities for provisioning, deploying, monitoring, upgrading/patching, and deleting deployed applications. An example service platform is available under the trade designation Service Fabric from Microsoft Corp. of Redmond, Washington. The service platform currently powers many services, including cloud-based management services available under the trade designations Intune from Microsoft, cloud-based data storage available under the trade designation Azure SQL Database from Microsoft, and many other cloud-based services. For example, an Azure SQL Database cluster, which is built on Service Fabric service, can include hundreds of machines running ten of thousands of containers hosting hundreds of thousands of databases in which each database is a stateful microservice.

Datacenter may be an on-premises, private system that provides services to a single enterprise user or may be a publicly (or semi-publicly) accessible, distributed system that provides services to multiple, possibly unrelated customers and tenants, or may be a combination of both. Further, a datacenter may be a contained within a single geographic location or may be distributed to multiple locations across the globe and provide redundancy and disaster recovery capabilities. For example, the datacenter may designate one virtual machine on a server as the primary location for a tenant's application and may activate another virtual machine on the same or another server as the secondary or back-up in case the first virtual machine or server fails.

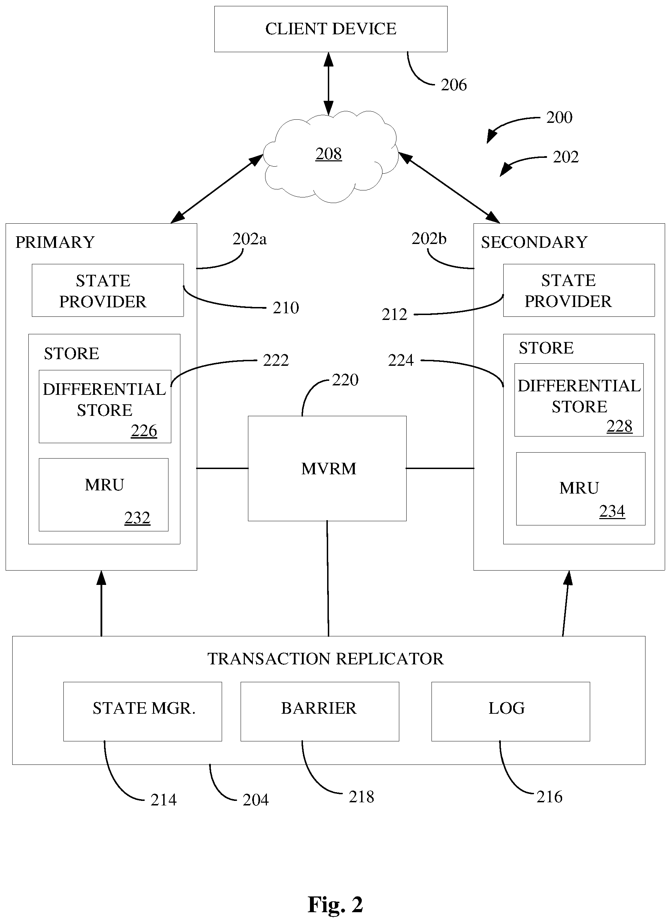

Figure 2 illustrates an example system 200 implementing a multi-version removal manager to trim or collect version chains such that the number of versions includes the number of executing transactions having snapshot isolation plus a predetermined amount of previously committed versions. In one example, the predetermined amount of previously committed versions is two versions. The multi-version removal manager can perform trimming and collection after the transactions have been applied or committed. The examples improve resource utilization and performance by reducing the number of versions a state provider keeps alive and provides efficient mechanisms for removal of the versions that are not utilized or kept alive.

In one example, the system 200 includes two or more interconnected nodes 202, such as nodes 202a - 202n that may represent different servers, processors, or virtual machines in a cluster at one or more locations operably coupled to a transaction replicator 204. System 200 can operate on a distributed services platform. System 200, and in particular, nodes 202 can be connected to a client device 206 through a network 208, which can be any public or private data network.

Nodes 202 can control state providers 210, 212 that may include, for example, transactional databases. Both primary and secondary replicas of the state providers 210, 212 are supported for redundancy and backup. For example, if a node, such as node 202a, fails while running a primary replica of a service, the cluster can designate a secondary replica on an active node, such as node 202n, as the new primary replica. A replica instance of a service partition can include one or more state providers, which, in one example, can be similar to resource managers in database terminology. In one example, the primary and secondary replicas of the state providers 210, 212 each include separate instances of the transactional replicator 204 that are operably coupled to communicate with each other.

Transaction replicator 204 provides for transactions to be replicated across nodes 202 including across state providers 210, 212. For example, local operations can be performed on the primary replica and replicated on one ore more secondary nodes. Transaction replicator 204 provides for a quorum of primary and secondary replicas for the service have the same state changes made in the transactions. In one example, transaction replicator 204 can implemented as a services running on a server, processor, or virtual machine, and can be implemented in one or more of nodes 202a - 202n or in another node within the cluster.

In the illustrated example, the transaction replicator 204 includes a state manager 214 that is aware of multiple state providers 210, 212, a log 216 that maintains a record of operations, and a barrier element 218 that maintains semantics among the multiple state providers and can define the order of operations state providers 210, 212 perform. In one example, barrier element 218 keeps track of the order of operations on a state provider 210, 212 and provides the same order of operations on the other replicas of the state provider so that state changes are available to the state providers 210, 212. A barrier orders a group of operations so that the operations before the barrier are guaranteed to be processed before any operations from the group of operations after the barrier. Processing the record maintained in log 216 allows the transaction replicator 204 to define the order of operations. The transaction replicator 204 provides for preservation of the order of operations when a node 202 fails or instructions are being replicated on another node.

The transaction replicator 204 can commit multiple transactions in a group on multiple state providers 210, 212 rather than committing transactions one by one or operating on a single state provider. The barrier element 218 creates barriers that prevent committing additional transactions until a group of transactions preceding a barrier have applied the state changes. State providers apply the transactions preceding the barrier before additional transactions will be committed. A quorum acknowledgement removes any locks that were acquired to update the state with a state provider. Accordingly, the transaction replicator 204 can enable parallel dispatch of transactions across multiple state providers to achieve efficient throughput without being aware of higher-level data structures of the state providers 210, 212 in system 200.

The transaction replicator 204 makes use of visibility sequence numbers, which are, in one example, selected version sequence numbers for a given transaction in snapshot isolation. The transaction replicator 204 in one example is aware of executing transactions, such as snapshot transactions or inflight enumerations, and the corresponding visibility sequence number, and can determine whether a given version is visible by any of the visibility sequence numbers.

In addition to state providers, 210, 212, nodes 202 can include a store component 222, 224. Each store component 222, 224 can include a differential store 226, 228, respectively and a multi-version retirement unit (MRU) 232, 234, respectively. The differential store 226, 228 can include operations and protocols to process elements concurrently committing transactions, i.e., a differential state, as well as elements containing the outcomes of previously committed transactions, i.e., a consolidated state. Further, the store components 222, 224, can include operations for checkpointing, or the process of making an in-memory state durable including surviving node state changes and crashes. In one example the MRU 232, 234 can include operations and protocols to maintain previously committed versions not ready for removal.

A multi-version removal manager 220 can be implemented as a feature of system 200 and includes the operations and protocol to operate with the transaction replicator 204 and the store component 222, 224, including the MRU 232, 234 and control trimming of versions as new operations are applied and when enumerations are disposed. The multi-version removal manager 220 can be implemented in the distributed services platform on the cluster as a node separate from the primary and secondary nodes or as part of the primary and secondary nodes.

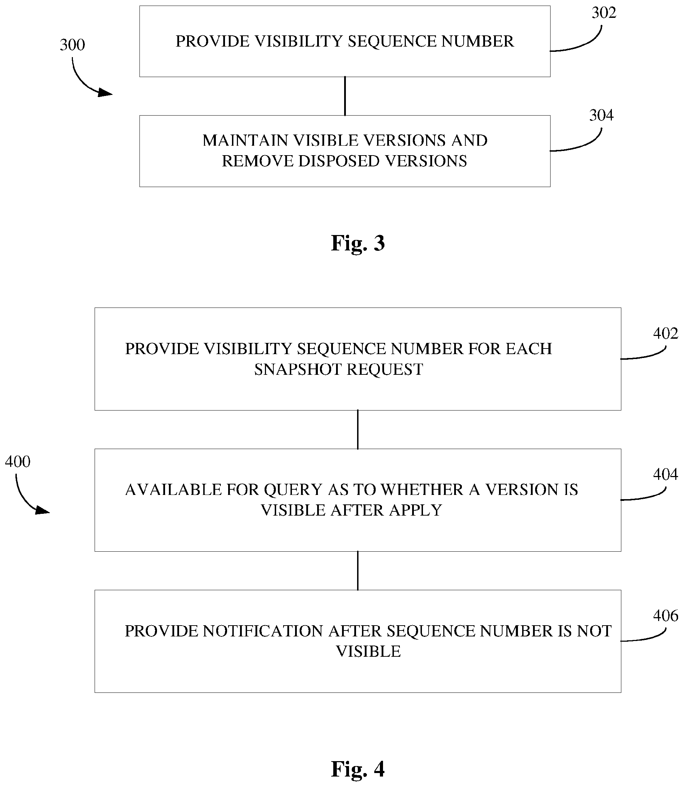

Figure 3 illustrates an example method 300 of the multi-version removal manager 220 implemented in system 200. In one example, A visibility sequence number is provided such that operations with a lower sequence number than the visibility sequence number have been applied and a preselected amount of operations with a higher sequence number could have been applied at 302. Visible versions are maintained and versions related to a visibility sequence number are removed after an executing transaction is disposed at 304, such as after all relevant executing transactions are disposed.

Method 300, as well as the methods described in this disclosure, can be implemented in a combination of hardware and programming to implement the functionalities of the example system 200. Such combinations of hardware and programming may include processor executable instructions stored on at least one non-transitory machine-readable storage medium, and the hardware for the engines may include at least one processing resource to execute those instructions. In some examples, the hardware may also include other electronic circuitry to at least partially implement at least one feature of system 200 and method 300. In some examples, the at least one machine-readable storage medium, such as a memory device, may store instructions that, when executed by the at least one processor, at least partially implement some or all features of system 200 and the disclosed methods In such examples, system 200 may include the at least one machine-readable storage medium storing the instructions and the at least one processing resource to execute at least one of the methods In other examples, the functionalities of the system 200 and methods may be at least partially implemented in the form of electronic circuitry.

In one example, method 300 can be implemented to determine whether a particular version inside the store is eligible for removal. In one example, store can call a method TryRemoveVersion() with the version it is querying to remove and the subsequent newer version. If there is a visibility sequence number in an inflight visibility sequence number list, such as the version manager list, that is between the version in question and the newer version, the version being requested to be removed remains visible. This version can be moved to the MRU 232, 234.

Figure 4 illustrates a method 400 of the multi-version removal manager 220 including features of method 300 that can be implemented with the transaction replicator 204. In the example, the transaction replicator 204 provides a visibility sequence number for each snapshot request at 402 such as a monotonically increasing number in a sequence. In assigning the visibility sequence number, the transaction replicator 204 determines that operations having a lower sequence number have been applied in a transaction. Additionally, only a given number of operations with a higher visibility sequence number could have been applied. For example, the barriers of the transaction replicator 204 can provide a guarantee that only a given number of operations with a higher visibility sequence number could have been applied. In one example, the given number of operations is one operation. In this example, the transaction replicator will not assign a visibility sequence number less than the upper limit in a range of numbers in which all operations have been applied. Additionally, the transaction replicator will not assign a visibility sequence number less than two or more sequence numbers in which operations have been applied. The transaction replicator 204 is available for query as to whether a given version is visible after each apply at 404. Further, the transaction replicator 204 provides notifications to the store 222, 224 after a given sequence number is not visible at 406.

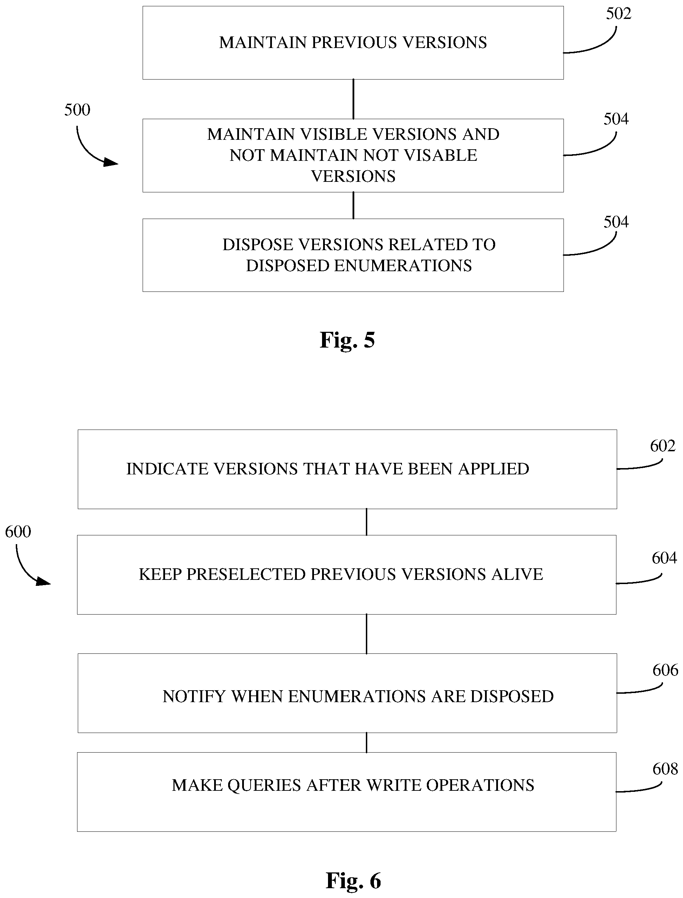

Figure 5 illustrates a method 500 of the multi-version removal manager 220 including features of method 300 that can be implemented with the store component 222, 224. In the example, the store component will maintain in memory the previous two versions of any key, as determined by a version sequence number, at 502. The store will maintain in memory versions that are visible and not maintain version that are not visible at 504. The store component 222, 224 can query the transaction replicator 204 as to whether a given version is visible after each apply. When enumerations are disposed, versions related to the visibility number are disposed at 506.

Figure 6 illustrates a method 600 of the multi-version removal manager 220 that can be implemented with the system 200 including the transaction replicator 204 and store components 222, 224 as an example implementation of method 300. Operations that have version sequence numbers that have been applied are indicated at 602. In one example, a barrier is used to indicate operations that have version sequence numbers that have been applied. In this example, a barrier is assigned a barrier sequence number that can correspond with a version sequence number. Barriers can be assigned such that operations that have a lower sequence number than the barrier sequence number are indicated as applied.

A determined number of previous versions of a key are kept alive in the store 222, 224 at 604. In one example, the determined number is two, i.e., the store maintains the last two versions of a key alive. Operations having a higher sequence number than the barrier sequence number may or may not have been applied. In one example, the visibility sequence number is snapped while an enumeration is being created at selected number of operations per key that is higher than the barrier sequence number. For example, the selected number is one number of operations per key. This facilitates that a racing apply does not cause the transaction replicator 204 to incorrectly indicate that an older version is removable.

In one example, the last dispatched barrier version is applied so that a committed state can be read in the same thread. The last dispatched barrier version's apply is awaited before the visibility sequence number is assigned, which allows committed state on the same thread to be readable. In this example, enumerations are created after the last dispatched barrier is applied to improve write throughput over read performance. In another example, commits await the completion of the dispatching barrier before unlocking to improve snapshot isolation read performance over write throughput.

Stores 222, 224 are notified when enumerations of a visibility sequence number are disposed at 606. The transaction replicator 204 in one example is aware of inflight enumerations including corresponding visibility sequence numbers. When transactional replicator 204 detects that all enumerators on a visibility sequence number have been disposed, it can provide notifications to the stores 222, 224. In one example, the transaction replicator 204 sends the notification to the nodes 202 that are keeping a version in an MRU 232, 234 because of the relevant visibility sequence number.

Queries are made after write operations to determine versions can be removed at 608. In one example, queries are performed after every write. The store components 222, 224 can query the transaction replicator 204 after writes to determine if a selected previous version, such as the version prior to the last committed version can be removed. If so, the store can dispose of the version or versions. If not, the selected previous version can be maintained in the MRU 232, 234 rather than the differential store 226, 228. Using the MRU 232, 234 to maintain the selected previous version makes code paths such as checkpointing more efficient and allows the differential store 226, 228 to be optimized differently than the MRU 232, 234, such as without regard to the selected previous versions.

The MRU 232, 234 can be implemented in one or more of several configurations. For example, one implementation can provide for quick disposal after enumeration completion notifications are received. Another implementation can provide for a reduced, or efficient resource footprint. The MRU 232, 234 implementations can improve the storage of version that are referenced by an enumeration but are not one of the latest two committed versions. In an example of a quick disposal configuration, the MRU 232, 234 is provided as: Dictionary<VisibilitySequenceNumber, <Dictionary<key, value>>

In this example, values are references and provide for minimal or reduced impact on resources. The inner dictionary does not need to keep the version because every match is a perfect match. When a visibility sequence number is not referenced by any snapshot isolation transactions, entire subset dictionary can simply be dropped. Though disposal is efficient in the above configuration, one or more versions could be in multiple sub-dictionaries, which can have effect on resource utilization and resource footprint. A reference count mechanism can be included in an example of a reduced resource footprint configuration.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein.

## Claims

1. A method of trimming versions in transaction processing, the method comprising:
providing a visibility sequence number to versions such that operations having a lower transaction sequence number than the visibility sequence number have all been applied and a preselected amount of operations with a higher transaction sequence number than the visibility sequence number could have been applied;
providing a notification when an enumeration in a transaction processing has been applied or committed;
providing just-in-time version trimming maintaining a selected number of at least one visible version and removing versions related to a visibility sequence number after an executing transaction is applied or committed; and
determining, after an apply, whether a version is visible;
wherein an updated version is maintained in a multi-version storage container;
wherein a unique transaction sequence number identifies each transaction, and the unique transaction sequence numbers are recorded for each version; and
wherein a transaction works with the most recent versions having a transaction sequence number before the sequence number of the transaction.

2. The method of claim 1 comprising:
tracking the order of operations via a barrier having a barrier sequence number such that operations having sequence numbers less than the barrier sequence number have been applied and such that the preselected amount of operations with sequence numbers greater than the barrier sequence number could have been applied.

3. The method of claim 1 comprising:
querying whether versions can be removed.

4. The method of claim 1 wherein the preselected amount of operations is one.

5. The method of claim 1 wherein the selected number of at least one visible version is maintained in a differential store.

6. The method of claim 1 wherein the visibility sequence number is provided at a snapshot request.

7. A multi-version removal manager in a transaction processing system, comprising:
a transaction replicator, configured to provide a visibility sequence number to versions such that operations having a lower transaction sequence number than the visibility sequence number have all been applied and a preselected amount of operations with a higher transaction sequence number than the visibility sequence number could have been applied; and
a store component, configured to provide just-in-time version trimming maintaining in memory a selected number of at least one visible version and removing versions related to a visibility sequence number after an executing transaction is applied or committed, and to query the transaction replicator after an apply to determine whether a version is visible;
wherein the transaction replicator is configured to provide a notification to the store component when an enumeration in a transaction processing has been applied or committed;
wherein an updated version is maintained in a multi-version storage container;
wherein a unique transaction sequence number identifies each transaction, and the unique transaction sequence numbers are recorded for each version; and
wherein a transaction works with the most recent versions having a transaction sequence number before the sequence number of the transaction.

8. The multi-version removal manager of claim 7 maintaining in memory the previous two versions of any data object, row or key.

9. The multi-version removal manager of claim 7 wherein the transaction replicator will not assign to transactions set for snapshot isolation a visibility sequence number less than two or more transaction sequence numbers in which operations have been applied.

10. A computer-readable medium comprising computer executable instructions which when executed on the transaction processing system of claim 7 perform the method of any of claims 1 to 6.

## Patentansprüche

1. Verfahren zum Trimmen von Versionen bei der Transaktionsverarbeitung, wobei das Verfahren umfasst:
Bereitstellen einer Sichtbarkeitssequenzzahl für Versionen, so dass Operationen mit einer niedrigeren Transaktionssequenzzahl als der Sichtbarkeitssequenzzahl allesamt angewendet wurden und eine vorausgewählte Menge von Operationen mit einer höheren Transaktionssequenzzahl als der Sichtbarkeitssequenzzahl hätte angewendet werden können;
Bereitstellen einer Benachrichtigung, wenn eine Aufzählung in einer Transaktionsverarbeitung angewendet oder festgeschrieben wurde;
Bereitstellung einer Just-in-Time-Versionstrimmung unter Beibehaltung einer ausgewählten Anzahl von wenigstens einer sichtbaren Version und Entfernen von Versionen, die sich auf eine Sichtbarkeitssequenzzahl beziehen, nachdem eine ausgeführte Transaktion angewendet oder festgeschrieben wurde; und
Bestimmen, nach einem Anwenden, ob eine Version sichtbar ist;
wobei eine aktualisierte Version in einem Speichercontainer mit mehreren Versionen verwaltet wird;
eine eindeutige Transaktionssequenzzahl jede Transaktion identifiziert und die eindeutigen Transaktionssequenzzahlen für jede Version aufgezeichnet werden; und
eine Transaktion mit den neuesten Versionen arbeitet, die eine Transaktionssequenzzahl vor der Sequenzzahl der Transaktion haben.

2. Verfahren nach Anspruch 1, umfassend:
Verfolgen der Reihenfolge von Operationen über eine Barriere mit einer Barriere-Sequenzzahl, so dass Operationen mit Sequenzzahlen, die kleiner als die Barriere-Sequenzzahl sind, angewendet wurden und die vorgewählte Menge von Operationen mit Sequenzzahlen, die größer als die Barriere-Sequenzzahl sind, hätte angewendet werden können.

3. Verfahren nach Anspruch 1, umfassend:
Abfragen, ob Versionen entfernt werden können.

4. Verfahren nach Anspruch 1, bei dem die vorausgewählte Anzahl von Operationen eins ist.

5. Verfahren nach Anspruch 1, bei dem die ausgewählte Anzahl von wenigstens einer sichtbaren Version in einem Differentialspeicher aufbewahrt wird.

6. Verfahren nach Anspruch 1, bei dem die Sichtbarkeitssequenzzahl bei einer Momentaufnahmeanforderung bereitgestellt wird.

7. Verwaltungseinheit zum Entfernen mehrerer Versionen in einem Transaktionsverarbeitungssystem, umfassend:
einen Transaktionsreplikator, der dazu eingerichtet ist, Versionen eine Sichtbarkeitssequenzzahl bereitzustellen, so dass Operationen mit einer niedrigeren Transaktionssequenzzahl als der Sichtbarkeitssequenzzahl allesamt angewendet wurden und eine vorausgewählte Menge von Operationen mit einer höheren Transaktionssequenzzahl als der Sichtbarkeitssequenzzahl hätte angewendet werden können; und
eine Speicherkomponente, die dazu eingerichtet ist, eine Just-in-Time-Versionstrimmung bereitzustellen, die eine ausgewählte Anzahl von wenigstens einer sichtbaren Version in dem Speicher beibehält und Versionen entfernt, die sich auf eine Sichtbarkeitsfolgezahl beziehen, nachdem eine ausgeführte Transaktion angewendet oder festgeschrieben wurde, und den Transaktionsreplikator nach einer Anwendung abzufragen, um festzustellen, ob eine Version sichtbar ist;
wobei der Transaktionsreplikator dazu eingerichtet ist, eine Benachrichtigung an die Speicherkomponente bereitzustellen, wenn eine Aufzählung in einer Transaktionsverarbeitung angewendet oder festgeschrieben wurde;
eine aktualisierte Version in einem Speichercontainer mit mehreren Versionen verwaltet wird;
eine eindeutige Transaktionssequenzzahl jede Transaktion identifiziert und die eindeutigen Transaktionssequenzzahlen für jede Version aufgezeichnet werden; und
eine Transaktion mit den neuesten Versionen arbeitet, die eine Transaktionssequenzzahl vor der Sequenzzahl der Transaktion haben.

8. Verwaltungseinheit zum Entfernen mehrerer Versionen nach Anspruch 7, die die vorherigen zwei Versionen eines Datenobjekts, einer Zeile oder eines Schlüssels im Speicher beibehält.

9. Verwaltungseinheit zum Entfernen mehrerer Versionen nach Anspruch 7, bei der der Transaktionsreplikator Transaktionen, die für die Momentaufnahmen-Isolierung festgelegt wurden, keine Sichtbarkeitssequenzzahl, die kleiner als zwei ist oder mehr Transaktionssequenzzahlen ist, in denen Operationen angewendet wurden, zuweisen wird.

10. Computerlesbares Medium, das computerausführbare Anweisungen umfasst, die, wenn sie auf dem Transaktionsverarbeitungssystem nach Anspruch 7 ausgeführt werden, das Verfahren nach einem der Ansprüche 1 bis 6 ausführen.

## Revendications

1. Procédé d'ajustage de versions dans le traitement de transactions, le procédé comprenant les opérations suivantes:
fournir un numéro de séquence de visibilité aux versions telles que les opérations ayant une valeur inférieure le numéro de séquence de transaction que le numéro de séquence de visibilité ont toutes été appliquées et un nombre d'opérations présélectionné avec un numéro de séquence de transaction supérieur au numéro de séquence de visibilité aurait pu être appliqué;
fournir une notification lorsqu'une énumération dans un traitement de transaction a été appliquée ou validée;
fournir un ajustement de version juste à temps en conservant un nombre sélectionné d'au moins une version visible et en supprimant les versions associées à un numéro de séquence de visibilité après l'application ou la validation d'une transaction en cours d'exécution; et
déterminer, après une application, si une version est visible;
dans lequel une version mise à jour est maintenue dans un conteneur de stockage à versions multiples; dans lequel un numéro de séquence de transaction unique identifie chaque transaction et les numéros de séquence de transaction uniques sont enregistrés pour chaque version; et
dans lequel une transaction fonctionne avec les versions les plus récentes ayant un numéro de séquence de transaction avant le numéro de séquence de la transaction.

2. Procédé selon la revendication 1, comprenant les étapes suivantes:
suivi de l'ordre des opérations via une barrière ayant un numéro de séquence de barrière tel que des opérations ayant des numéros de séquence inférieurs au numéro de séquence de barrière ont été appliquées et telles que le nombre présélectionné d'opérations avec des numéros de séquence supérieurs au numéro de séquence de barrière aurait pu être appliqué.

3. Procédé selon la revendication 1, comprenant les étapes suivantes:
demander si des versions peuvent être supprimées.

4. Procédé selon la revendication 1, dans lequel la quantité présélectionnée d'opérations est égale à une.

5. Procédé selon la revendication 1, dans lequel le nombre sélectionné d'au moins une version visible est conservé dans un magasin différentiel.

6. Procédé selon la revendication 1, dans lequel le numéro de séquence de visibilité est fourni lors d'une demande de prise de vue instantanée.

7. Gestionnaire de suppression de versions multiples dans un système de traitement de transactions, comprenant:
un réplicateur de transaction, configuré pour attribuer aux versions un numéro de séquence de visibilité tel que les opérations ayant un numéro de séquence de transaction inférieur au numéro de séquence de visibilité aient toutes été appliquées et qu'un nombre présélectionné d'opérations avec un numéro de séquence de transaction supérieur au numéro de séquence de visibilité pourrait avoir été appliqué; et
un composant de magasin, configuré pour fournir un découpage de version juste à temps, maintenant en mémoire un nombre sélectionné d'au moins une version visible et supprimant les versions associées à un numéro de séquence de visibilité après l'application ou la validation d'une transaction en cours d'exécution, et pour interroger le réplicateur de transactions après une application pour déterminer si une version est visible;
dans lequel le réplicateur de transaction est configuré pour fournir une notification au composant de magasin lorsqu'une énumération dans un traitement de transaction a été appliquée ou validée;
dans lequel une version mise à jour est maintenue dans un conteneur de stockage à versions multiples; dans lequel un numéro de séquence de transaction unique identifie chaque transaction et les numéros de séquence de transaction uniques sont enregistrés pour chaque version; et
dans lequel une transaction fonctionne avec les versions les plus récentes ayant un numéro de séquence de transaction avant le numéro de séquence de la transaction.

8. Gestionnaire de suppression de versions multiples selon la revendication 7, conservant en mémoire les deux versions précédentes de tout objet de données, rangée ou clé.

9. Gestionnaire de suppression de versions multiples selon la revendication 7, dans lequel le réplicateur de transaction ne pas attribuer à des transactions définies pour l'isolement d'instantané un numéro de séquence de visibilité inférieur à deux ou plus de numéros de séquence de transaction dans lesquels des opérations ont été appliquées.

10. Support lisible par ordinateur comprenant des instructions exécutables par ordinateur qui lorsqu'elles sont exécutées sur le système de traitement de transactions de la revendication 7, mettent en oeuvre le procédé de revendications 1 à 6.
